# FASCICULE DE BREVET EUROPEEN

(11) **EP 0 504 777 B1**
(45) Date de publication et mention de la délivrance du brevet: **04.12.1996**
(21) Numéro de dépôt: 92104512.6
(22) Date de dépôt: 16.03.1992
(51) Int. Cl.: H04B 10/16

(54) **Système de transmission de signaux auxiliaires sur une liaison optique**
System zur Hilfssignalübertragung mittels einer optischen Verbindung
Auxiliary signal transmission system over an optical link

(30) Priorité: 22.03.1991 FR 9103510
(43) Date de publication de la demande: 23.09.1992
(73) Titulaire: ALCATEL CIT, F-75008 Paris (FR)
(72) Inventeur: Letellier, Vincent, F-35310 Chavagne (FR); Bourret, Gérard, F-91620 La Ville du Bois (FR)
(74) Mandataire: Weinmiller, Jürgen

(56) Documents cités:
- EP-A- 0 395 277
- EP-A- 0 415 438
- WO-A-86/07642
- IEEE GLOBAL TELECOMMUNICATIONS CONFERENCE & EXHIBITION, GLOBECOM 90 vol. 3, 5 Décembre 1990, SAN DIEGO,CA,US pages 1846 - 1850; S.MATSUOKA ET AL: 'Supervisory signal Transmission methods for optical amplifier repeater systems'
- PATENT ABSTRACTS OF JAPAN vol. 10, no. 247 (P-490)(2303) 26 Août 1986 &JP-A-61 075 326

## Description

La présente invention concerne un système de transmission, sur une liaison optique, de signaux dits auxiliaires par rapport à des signaux dits de trafic transmis simultanément sur cette liaison.

On entend par signaux auxiliaires des signaux occupant une partie relativement faible, et située vers les basses fréquences, de la bande spectrale offerte pour les signaux à transmettre sur la liaison.

Les signaux de trafic, transmis par modulation de porteuse optique, sont par exemple des signaux transmis entre deux équipements dits terminaux de cette liaison.

Les signaux auxiliaires sont par exemple des signaux échangés entre des équipements dits de ligne, tels que des répéteurs, et les équipements terminaux de la liaison, dans le cadre d'une procédure de télésurveillance de ces répéteurs à partir de ces équipements terminaux, auquel cas chaque répéteur doit pouvoir assurer les fonctions d'émission et de réception d'un tel signal, ainsi que de transmission d'un tel signal lorsqu'il n'en est pas lui-même l'émetteur ou le destinataire. Ce peut être aussi des signaux échangés entre les équipements terminaux.

Dans une liaison de transmission par fibre optique il est connu d'effectuer dans chaque répéteur successivement les opérations suivantes sur le signal optique incident : conversion optique-électrique, amplification, régénération, conversion électrique-optique. Il est en outre connu, par exemple dans le cas d'une transmission par modulation par tout ou rien d'une porteuse optique par le signal de trafic défini électriquement sous forme binaire en utilisant un code comportant des éléments binaires dits de contrôle de parité, de faire émettre par un répéteur un signal auxiliaire par violation, suivant une régle déterminée fonction du signal auxiliaire à émettre, de ces éléments binaires de contrôle de parité dans le signal binaire ainsi obtenu après régénération.

Le document EP-A-0 415 438 (FUJITSU) décrit un système de transmission de signaux de supervision sur une liaison optique à amplificateurs optiques à fibre dopée excitée par une onde de pompe.

Ce système connu comporte :
- pour l'émission de signaux de supervision, des moyens de modulation de l'onde de pompe par un signal haute fréquence ayant une période inférieure à la durée de vie de la fluorescence résultant d'un état excité, afin de ne pas affecter le gain de l'amplificateur pour les signaux de trafic;
- et pour la réception de ces signaux de supervision, un coupleur dichroique permettant de séparer les signaux de trafic et la partie résiduelle du signal de pompe qui n'a pas été utilisée dans l'amplificateur optique pour réaliser l'amplification, et un récepteur pour recevoir le signal de pompe modulé par le signal auxiliaire.

L'article IEEE Global Telecommunications Conference and Exhibition, Globecom 90, vol. 3, 5 décembre 1990, San Diego, CA, US pages 1846-1850, S. MATSUOKA et AL "Supervisory Signal Transmission Methods for Optical Amplifier Repeater Systems" décrit un système analogue à celui décrit dans le document EP-A-0 415 438. La fréquence minimale de modulation de l'onde de pompe est de 5 KHz pour éviter d'affecter l'amplification des signaux de trafic.

La présente invention a pour but un système de transmission de signaux auxiliaires dans lequel l'émission d'un signal auxiliaire par un équipement de ligne ne nécessite pas de traitement préalable de récupération du signal de trafic incident, en particulier pas de conversion optique-électrique et de régénération pour ce signal de trafic, et qui soit donc particulièrement adapté à une liaison entièrement optique.

La présente invention a également pour but un système de transmission de signaux auxiliaires dans lequel l'émission d'un signal auxiliaire par un équipement ne résulte pas, contrairement aux systèmes antérieurs tels que celui rappelé ci-dessus, d'un traitement direct du signal de trafic incident lui-même et n'est donc pas susceptible d'être limitée par certaines des caractéristiques de ce signal, telles que le débit.

La présente invention a pour objet un système de transmission, sur une liaison optique, d'un signal dit auxiliaire par rapport à un signal dit de trafic transmis simultanément sur cette liaison, pour liaison optique comportant au moins un équipement comportant lui-même des moyens d'amplification optique de signaux optiques incidents, essentiellement caractérisé en ce qu'il comporte, pour l'émission du signal auxiliaire par ledit équipement, des moyens de modulation du gain des moyens d'amplification optique de cet équipement, par ledit signal auxiliaire.

D'autres objets et caractéristiques de la présente invention apparaîtront à la lecture de la description suivante d'exemples de réalisation, faite en relation avec les dessins ci-annexés dans lesquels :
- la figure 1 est un schéma montrant des moyens permettant une émission de signaux auxiliaires par un équipement d'une liaison optique, dans un système de transmission suivant l'invention,
- la figure 2 est un premier exemple de réalisation de certains des moyens du schéma de la figure 1, dans le cas d'un signal auxiliaire défini électriquement, pour son émission, sous forme d'un signal numérique en bande de base,
- la figure 3 est un second exemple de réalisation de certains des moyens du schéma de la figure 1, dans le cas d'un signal auxiliaire, numérique ou analogique, modulant, pour son émission, une porteuse électrique,
- la figure 4 est un schéma montrant des moyens permettant, dans un équipement d'une liaison optique, une réception de signaux auxiliaires dans un système de transmission suivant l'invention,
- la figure 5 est un premier exemple de réalisation de certains des moyens du schéma de la figure 4, dans le cas d'un signal auxiliaire défini électriquement, par son émission, sous forme d'un signal numérique en bande de base,
- la figure 6 est un second exemple de réalisation de certains des moyens du schéma de la figure 4, dans le cas d'un signal auxiliaire, numérique ou analogique, modulant pour son émission, une porteuse électrique,
- la figure 7 est un schéma montrant des moyens permettant, dans un équipement d'une liaison optique, une transmission d'un signal auxiliaire reçu d'un équipement amont et destiné à un équipement aval, dans un système de transmission suivant l'invention.

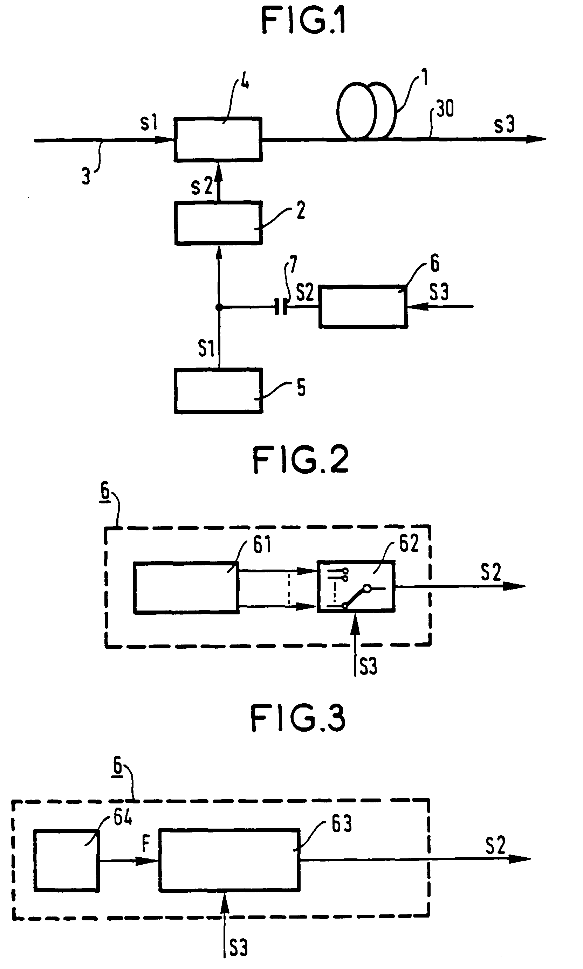

Les moyens d'émission d'un signal auxiliaire par un équipement d'une liaison optique, par exemple un équipement de ligne, représentés sur la figure 1 comportent un amplificateur optique 1 formé en l'occurrence par une portion de fibre optique dopée avec des ions de terre rare telle que l'Erbium par exemple, qui réalise, de façon connue et dans certaines conditions, une amplification optique à gain constant.

Cette portion de fibre doit pour cela recevoir un signal optique dit de pompe, s2, issu en général d'un laser 2, dit laser de pompe, qui est commandé par un signal électrique continu fixant l'amplitude moyenne de ce signal de pompe et donc ladite valeur constante du gain de l'amplificateur optique.

Le signal optique incident à amplifier, reçu sur une liaison à fibre optique 3, est alors appliqué à cet amplificateur optique par l'intermédiaire d'un moyen de couplage 4 qui réalise un multiplexage en longueur d'onde du signal optique incident s1, formé par exemple d'une porteuse optique à une longueur d'onde λ1 (de par exemple 1,55 µm) modulée par un signal de trafic, et du signal de pompe s2, par exemple à une longueur d'onde λ2 de 0,98µm ou 1,48µm ou autre.

Suivant l'invention, le signal de pompe s2 est modulé en amplitude par le signal auxiliaire à émettre, le signal électrique de commande du laser de pompe étant alors obtenu par superposition d'une composante continue S1 issue d'un générateur 5 de signal électrique continu et d'une composante alternative S2 représentant le signal auxiliaire à émettre et issue d'un générateur 6 de signal électrique alternatif recevant ce signal auxiliaire référencé S3 dans la figure.

Le gain de l'amplificateur 1 voit alors sa valeur modulée, par ce signal auxiliaire, autour de la valeur, constante, correspondant à une alimentation du laser de pompe par le seul générateur de signal électrique continu 5. Le taux de modulation peut être par exemple de l'ordre de 10 à 25%.

Le signal optique, s3, issu de l'amplificateur optique 1 et appliqué à une fibre optique 30, correspond alors au signal optique incident s1, après amplification et surmodulation en amplitude, par le signal auxiliaire, de la porteuse optique modulée par le signal de trafic.

On notera qu'un condensateur 7 est utilisé pour isoler l'une de l'autre les deux composantes, alternative et continue, appliquées à une même entrée de commande du laser de pompe.

Le signal auxiliaire peut être défini électriquement, pour son émission, sous différentes formes, par exemple sous forme d'un signal numérique en bande de base.

Dans ce cas le générateur 6 comporte par exemple, comme illustré sur la figure 2, un générateur 61 de signaux électriques continus fournissant (n-1) signaux électriques continus de différents niveaux pour un signal auxiliaire à n niveaux (n entier au moins égal à 2), un commutateur électronique 62 à n positions recevant les (n-1) signaux continus issus du générateur 61 et commandé par un signal de commande constitué du signal auxiliaire S3 issu dans ce cas d'une source (non représentée) de signal auxiliaire numérique en bande de base. Sous la commande du signal S3, le commutateur 62 laisse passer sélectivement l'un des signaux continus fournis par le générateur 61 ou bien ouvre le circuit électrique permettant ainsi d'obtenir la forme souhaitée du signal auxiliaire pour son émission. Bien entendu dans le cas d'un signal auxiliaire binaire, le commutateur 62 se réduit à un simple interrupteur permettant de laisser passer ou couper le signal continu unique fourni alors par le générateur 61.

Le schéma de la figure 3 correspond au cas d'un signal auxiliaire, numérique ou analogique, modulant, pour son émission, une porteuse électrique F.

Dans ce cas le générateur 6 comporte une source 64 de porteuse électrique fournissant cette porteuse et un modulateur 63 qui reçoit d'une part cette porteuse et d'autre part un signal modulant constitué du signal auxiliaire S3 issu dans ce cas d'une source (non représentée) de signal auxiliaire numérique ou analogique en bande de base, permettant, suivant des techniques connues et non rappelées ici, d'obtenir la forme souhaitée du signal auxiliaire pour son émission.

Dans le cas (non illustré spécifiquement) d'un signal auxiliaire défini électriquement, pour son émission, sous forme d'un signal analogique, en bande de base, le générateur 6 peut être réduit à une simple ligne de transmission entre une source de signal auxiliaire analogique en bande de base et le condensateur 7 (figure 1).

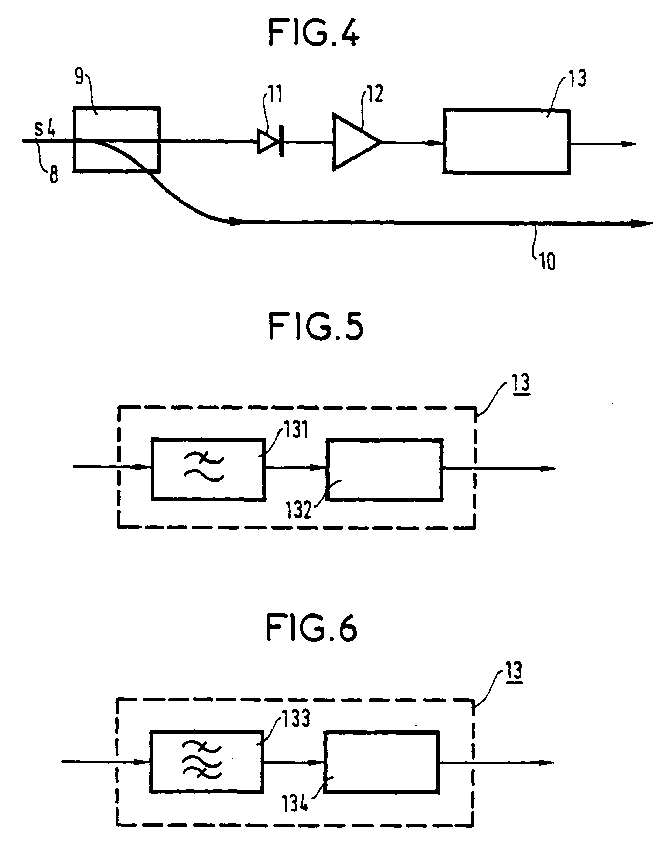

On a représenté sur la figure 4 un exemple de moyens mis en oeuvre, dans un équipement d'une liaison optique, pour la réception de signaux auxiliaires dans un système de transmission selon l'invention. Sur cette figure on a repéré 8 la fibre optique de la liaison qui transporte le signal optique incident constitué par exemple d'un signal de trafic et d'un signal auxiliaire.

Ces moyens de réception comportent :
- des moyens 9, constitués en l'occurrence par un coupleur optique, pour prélever une fraction relativement faible, par exemple de l'ordre de 5 à 10%, du signal optique incident, s4, dont l'autre fraction, principale, transportée par une fibre optique repérée 10, est disponible pour sa transmission en aval de la liaison s'il s'agit d'un équipement de ligne ou est disponible pour la réception du signal de trafic s'il s'agit d'un équipement terminal,
- des moyens 11 de conversion optique-électrique, constitués en l'occurrence par une photodiode,
- des moyens 12 d'amplification du signal électrique ainsi obtenu,
- des moyens 13 d'extraction du signal auxiliaire, comportant notamment des moyens de filtrage.

Le schéma de la figure 5 correspond au cas d'un signal auxiliaire défini électriquement, pour son émission, sous forme d'un signal numérique en bande de base. Dans ce cas les moyens 13 d'extraction de signal auxiliaire comportent des moyens de filtrage passe-bas 131, suivis éventuellement de moyens 132 de régénération du signal auxiliaire, suivant des principes bien connus et qui ne seront pas rappelés ici. Dans le cas (non illustré) d'un signal auxiliaire défini électriquement, pour son émission, sous forme d'un signal analogique en bande de base, les moyens de filtrage passe-bas 131 seront suivis éventuellement de moyens d'amplification du signal auxiliaire au lieu des moyens 132 de régénération.

Le schéma de la figure 6 correspond au cas d'un signal auxiliaire, numérique ou analogique, modulant, pour son émission, une porteuse électrique F. Dans ce cas les moyens 13 d'extraction de signal auxiliaire comportent des moyens de filtrage passe-bande 133, aptes à assurer un filtrage autour de la fréquence porteuse F considérée, suivis d'un démodulateur 134 restituant le signal auxiliaire, également suivant des principes bien connus et qui ne seront pas rappelés ici.

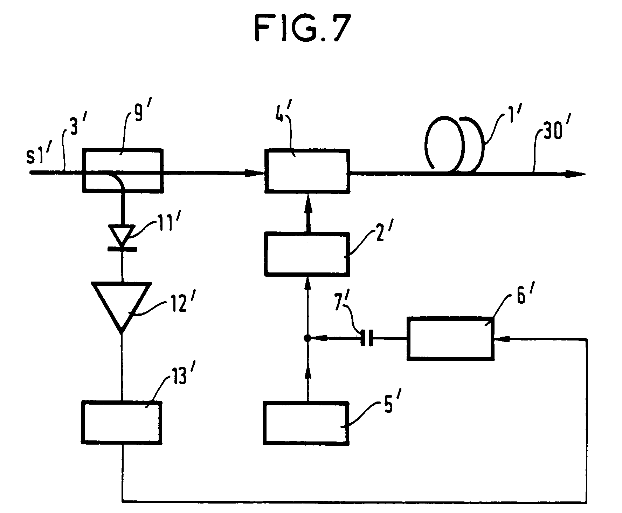

On a représenté sur le schéma de la figure 7 un exemple de moyens mis en oeuvre dans un équipement d'une liaison optique, par exemple un équipement de ligne, comportant un amplificateur optique 1' analogue à l'amplificateur optique 1 mentionné en regard de la figure 1 pour assurer dans un système de transmission selon l'invention une transmission, à travers cet équipement, d'un signal auxiliaire présent dans le signal optique reçu, sur une fibre optique 3', par cet équipement et repéré s1' dans la figure 7.

Cet exemple correspond au cas où la bande spectrale occupée par ce signal auxiliaire est telle que celui-ci ne peut être transmis directement par l'amplificateur optique 1', lequel est en effet de type passe-haut vis-à-vis du signal optique incident s1', alors qu'il est de type passe-bas vis-à-vis du signal auxiliaire qu'il est susceptible d'adjoindre à ce signal optique incident. Bien entendu, dans le cas où la bande spectrale occupée par le signal auxiliaire serait telle que celui-ci puisse être transmis directement par l'amplificateur optique, ces moyens de transmission se réduiraient à cet amplificateur optique.

Dans le cas visé par la figure 7, le signal auxiliaire est tout d'abord extrait du signal optique incident s1', par des moyens de réception 9' à 13' analogues respectivement aux moyens de réception 9 à 13 décrits précédemment en relation avec les figures 4 à 6, avec le coupleur optique 9' connecté à la fibre 3' pour assurer le prélèvement d'une fraction du signal optique incident s1' permettant cette extraction.

Ce signal auxiliaire ainsi extrait est ensuite réémis en sortie de I'équipement sur une fibre optique 30' grâce à des moyens d'émission comportant, outre l'amplificateur optique 1', des moyens 5', 6', 7', 2' et 4' analogues respectivement aux moyens 5, 6, 7, 2 et 4 décrits précédemment en relation avec des figures 1 à 3, le signal auxiliaire ainsi extrait étant appliqué en commande du générateur de signal alternatif 6' et le moyen de couplage 4' recevant, outre le signal de pompe issu du laser de pompe 2' et modulé en amplitude par ce signal auxiliaire, l'autre fraction, principale, du signal optique incident s1' fournie par le coupleur optique 9'.

On notera que, dans le cas notamment d'une application du système de transmission selon l'invention à une liaison optique entre deux équipements terminaux avec des équipements de ligne à amplificateurs optiques répartis le long de la liaison et dans laquelle chaque équipement de ligne doit pouvoir assurer les fonctions d'émission d'un signal auxiliaire ainsi que de transmission d'un signal auxiliaire émis par un équipement de ligne en amont sur la liaison, chaque équipement de ligne peut comporter des moyens de réception et des moyens d'émission d'un signal auxiliaire tels que ceux décrits en relation avec la figure 7 avec le signal issu des moyens de réception (c'est-à-dire des moyens d'extraction 13') appliqué à l'entrée de commande du générateur 6' à travers un circuit d'aiguillage (non illustré) connecté par ailleurs en entrée à une source de signal auxiliaire interne à l'équipement de ligne considéré. Ce circuit d'aiguillage peut être commandé par exemple par un signal de télécommande émis par un équipement terminal et détecté par l'équipement de ligne concerné selon des procédés bien connus.

On notera également que, bien entendu, l'invention s'applique aussi aux liaisons optiques sans équipements de ligne, c'est-à-dire sans équipements intermédiaires, et en particulier aux liaisons dites à longue portée dans lesquelles les équipements terminaux comportent un amplificateur optique en aval de l'émetteur optique.

On notera aussi que, bien que la description qui précède ait été faite plus particulièrement dans le cas d'un signal de trafic transmis sur une liaison optique par modulation d'une porteuse optique unique, l'invention n'est pas limitée à ce cas et s'applique bien entendu aussi au cas de plusieurs porteuses optiques présentes simultanément dans le signal optique incident.

On notera aussi que, bien que l'invention ait été décrite plus particulièrement dans le cas de moyens d'amplification optique comportant un amplificateur optique à fibre dopée, ceci ne constitue pas la seule forme de réalisation possible pour ces moyens d'amplification optique qui pourraient, par exemple, comporter un amplificateur optique à semi-conducteur recevant le signal optique incident et commandé par un signal électrique modulé par le signal auxiliaire à transmettre.

## Revendications (Revendications pour l'(les) Etat(s) contractant(s) suivant(s): DE, FR, GB, IT)

1. Système de transmission, sur une liaison optique, d'un signal dit auxiliaire par rapport à un signal dit de trafic transmis simultanément sur cette liaison, pour liaison optique comportant au moins un équipement comportant lui-même des moyens (1, 1') d'amplification optique de signaux optiques incidents.
caractérisé en ce qu'il comporte,
- pour réception de signaux auxiliaires par un équipement de ladite liaison :
-- des moyens (9, 9') pour prélever une fraction du signal optique incident,
-- des moyens (11, 11') pour effectuer une conversion optique-électrique du signal optique ainsi prélevé,
-- des moyens (12, 12') d'amplification du signal électrique ainsi obtenu,
-- des moyens (13, 13') d'extraction du signal auxiliaire de ce dernier signal;
- pour la réémission du signal auxiliaire par ledit équipement, des moyens (2, 4, 6, 7; 2', 4', 6', 7') de modulation du gain des moyens (1, 1') d'amplification optique de cet équipement, le signal auxiliaire extrait par les moyens d'extraction étant appliqué auxdits moyens de modulation.

2. Système selon la revendication 1, caractérisé en ce que lesdits moyens d'amplification optique (1, 1') comportant un amplificateur optique dit à fibre dopée, lesdits moyens de modulation de gain comportent :
- des moyens d'élaboration d'un signal optique dit de pompe, par modulation de l'amplitude d'une porteuse optique par le signal auxiliaire,
- des moyens (4, 4') de couplage du signal optique de pompe et du signal optique de trafic incident, pour application à l'amplificateur optique à fibre dopé.

3. Système selon la revendication 2, caractérisé en ce que lesdits moyens d'élaboration du signal optique de palpe comportent un laser (2, 2') commandé par un signal électrique obtenu par superposition d'une composante continue (S1), et d'une composante alternative (S2) représentant ledit signal auxiliaire.

## Revendications (Revendications pour l'(les) Etat(s) contractant(s) suivant(s): AT, BE, ES, NL, SE, CH, LI)

1. Système de transmission, sur une liaison optique, d'un signal dit auxiliaire par rapport à un signal dit de trafic transmis simultanément sur cette liaison, pour liaison optique comportant au moins un équipement comportant lui-même des moyens (1, 1') d'amplification optique de signaux optiques incidents, caractérisé en ce qu'il comporte, pour l'émission du signal auxiliaire par ledit équipement, des moyens de modulation du gain des moyens d'amplification optique de cet équipement, par ledit signal auxiliaire.

2. Système selon la revendication 1, caractérisé en ce que lesdits moyens d'amplification optique (1, 1') comportant un amplificateur optique dit à fibre dopée, lesdits moyens de modulation de gain comportent :
- des moyens d'élaboration d'un signal optique dit de pompe, par modulation de l'amplitude d'une porteuse optique par le signal auxiliaire,
- des moyens (4, 4') de couplage du signal optique de pompe et du signal optique de trafic incident, pour application à l'amplificateur optique à fibre dopée.

3. Système selon la revendication 2, caractérisé en ce que lesdits moyens d'élaboration du signal optique de pompe comportent un laser (2, 2') commandé par un signal électrique obtenu par superposition d'une composante continue (S1), et d'une composante alternative (S2) représentant ledit signal auxiliaire.

4. Système selon l'une des revendications 1 à 3, caractérisé en ce qu'il comporte, pour la réception de signaux auxiliaires par un équipement de ladite liaison:
- des moyens (9, 9') pour prélever une fraction du signal optique incident,
- des moyens (11, 11') pour effectuer une conversion optique-électrique du signal optique ainsi prélevé,
- des moyens (12, 12') d'amplification du signal électrique ainsi obtenu,
- des moyens (13, 13') d'extraction du signal auxiliaire de ce dernier signal.

5. Système de transmission d'un signal auxiliaire sur une liaison optique, caractérisé en ce qu'il comporte, pour la transmission d'un signal auxiliaire par un équipement de la liaison, des moyens de réception d'un signal auxiliaire suivant la revendication 4, et des moyens d'émission d'un signal auxiliaire suivant l'une des revendications 1 à 3, le signal auxiliaire appliqué auxdits moyens d'émission d'un signal auxiliaire étant celui issu desdits moyens de réception d'un signal auxiliaire.

## Patentansprüche (Patentansprüche für folgende(n) Vertragsstaat(en): DE, FR, GB, IT)

1. System zur Übertragung eines Hilfssignals gleichzeitig mit einem Verkehrssignal auf einer optischen Übertragungsstrecke, mit mindestens einer Einrichtung, die Mittel (1, 1') zur optischen Verstärkung der ankommenden optischen Signale enthält, dadurch gekennzeichnet, daß das System aufweist:
- für den Empfang von Hilfssignalen durch eine Einrichtung der Übertragungsstrecke:
-- Mittel (9, 9') zur Entnahme eines Teils des ankommenden optischen Signals,
-- Mittel (11, 11') zur optoelektrischen Umwandlung des so entnommenen Teils des optischen Signals,
-- Mittel (12, 12') zur Verstärkung des so erhaltenen elektrischen Signals,
-- Mittel (13, 13') zur Entnahme des Hilfssignals aus diesem letzteren Signal,
- für die Wiederaussendung des Hilfssignals durch diese Einrichtung Mittel (2, 4, 6, 7; 2', 4', 6', 7') zur Modulation des Verstärkungsgrads der optischen Verstärkungsmittel (1, 1') dieser Einrichtung, wobei das von den Entnahmemitteln entnommene Hilfssignal an die Modulationsmittel angelegt wird.

2. System nach Anspruch 1, dadurch gekennzeichnet, daß die optischen Verstärkungsmittel (1, 1') einen optischen Verstärker auf der Basis einer dotierten Lichtleitfaser enthalten und daß die Mittel zur Modulation des Verstärkungsgrads aufweisen:
- Mittel zur Erzeugung eines optischen Pumpsignals durch Modulation der Amplitude eines optischen Trägers mit dem Hilfssignal,
- Koppelmittel (4, 4') zum Koppeln des optischen Pumpsignals und des ankommenden optischen Verkehrssignals, damit beide an den optischen Verstärker mit dotierter Lichtleitfaser gelangen.

3. System nach Anspruch 2, dadurch gekennzeichnet, daß die Mittel zur Erzeugung des optischen Pumpsignals einen Laser (2, 2') enthalten, der von einem elektrischen Signal gesteuert wird, welches durch Überlagerung einer Gleichkomponente (S1) und einer das Hilfssignal darstellenden Wechselkomponente (S2) erhalten wird.

## Patentansprüche (Patentansprüche für folgende(n) Vertragsstaat(en): AT, BE, ES, NL, SE, CH)

1. System zur gleichzeitigen Übertragung eines Hilfssignals neben einem Verkehrssignal auf einer optischen Übertragungsstrecke, mit mindestens einer Einrichtung, die optische Verstärkungsmittel (1, 1') für die ankommenden optischen Signale enthält, dadurch gekennzeichnet, daß das System für die Aussendung des Hilfssignals durch die Einrichtung Mittel zur Modulation des Verstärkungsgrads der optischen Verstärkungsmittel dieser Einrichtung mit dem Hilfssignal enthält.

2. System nach Anspruch 1, dadurch gekennzeichnet, daß die optischen Verstärkungsmittel (1, 1') einen optischen Verstärker auf der Basis einer dotierten Lichtleitfaser enthalten und daß die Mittel zur Modulation des Verstärkungsgrads aufweisen:
- Mittel zur Erzeugung eines optischen Pumpsignals durch Modulation der Amplitude eines optischen Trägers mit dem Hilfssignal,
- Koppelmittel (4, 4') zum Koppeln des optischen Pumpsignals und des ankommenden optischen Verkehrssignals, damit beide an den optischen Verstärker mit dotierter Lichtleitfaser gelangen.

3. System nach Anspruch 2, dadurch gekennzeichnet, daß die Mittel zur Erzeugung des optischen Pumpsignals einen Laser (2, 2') enthalten, der von einem elektrischen Signal gesteuert wird, welches durch Überlagerung einer Gleichkomponente (S1) und einer das Hilfssignal darstellenden Wechselkomponente (S2) erhalten wird.

4. System nach einem der Ansprüche 1 bis 3, dadurch gekennzeichnet, daß für den Empfang von Hilfssignalen durch eine Einrichtung der Übertragungsstrecke vorgesehen sind:
- Mittel (9, 9') zur Entnahme eines Teils des ankommenden optischen Signals,
- Mittel (11, 11') zur optoelektrischen Umwandlung des so entnommenen Teils des optischen Signals,
- Mittel (12, 12') zur Verstärkung des so erhaltenen elektrischen Signals,
- Mittel (13, 13') zur Entnahme des Hilfssignals aus diesem letzteren Signal.

5. System zur Übertragung eines Hilfssignals auf einer optischen Übertragungsstrecke, dadurch gekennzeichnet, daß es für die Weiterübertragung eines Hilfssignals durch eine Einrichtung der Übertragungsstrecke Mittel zum Empfang eines Hilfssignals gemäß Anspruch 4 sowie Mittel zum Aussenden eines Hilfssignals gemäß einem der Ansprüche 1 bis 3 besitzt, wobei das an die Hilfssignal-Sendemittel angelegte Hilfssignal aus den Hilfssignal-Empfangsmitteln kommt.

## Claims (Claims for the following Contracting State(s): DE, FR, GB, IT)

1. A transmission system for transmitting over an optical link an auxiliary signal that is auxiliary relative to a traffic signal which is transmitted simultaneously over said link, the system being for an optical link including at least one equipment itself including optical amplification means (1, 1') for incident optical signals,
the system being characterized in that it includes,
for the purpose of enabling an equipment of said link to receive auxiliary signals:
means (9, 9') for taking a fraction of the incident optical signal;
means (11, 11') for performing optical to electrical conversion of the optical signal taken in this way;
means (12, 12') for amplifying the electrical signal obtained in this way; and
means (13, 13') for extracting the auxiliary signal from said electrical signal;
for the purpose of enabling said equipment to re-emit the auxiliary signal, means (2, 4, 6, 7; 2', 4', 6', 7') for modulating the gain of the optical amplification means (1, 1') of said equipment, the auxiliary signal extracted by the extraction means being applied to said modulation means.

2. A system according to claim 1, characterized in that said optical amplification means (1, 1') include a doped fiber optical amplifier, said gain modulation means including:
means for generating a pumping optical signal by amplitude modulating an optical carrier with the auxiliary signal; and
means (4, 4') for coupling together the pumping optical signal and the incident traffic optical signal for application to the doped fiber optical amplifier.

3. A system According to claim 2, characterized in that said means for generating the pumping optical signal include a laser (2, 2') controlled by an electrical signal obtained by superposing a DC component (S1) and an AC component (S2) representing said auxiliary signal.

## Claims (Claims for the following Contracting State(s): AT, BE, ES, NL, SE, CH)

1. A transmission system for transmitting over an optical link an auxiliary signal that is auxiliary relative to a traffic signal which is transmitted simultaneously over said link, the system being for an optical link including at least one equipment itself including optical amplification means (1, 1') for incident optical signals, the system being characterized in that it includes, for the purpose of enabling said equipment to emit the auxiliary signal, means for modulating the gain of the optical amplification means of said equipment by said auxiliary signal.

2. A system according to claim 1, characterized in that said optical amplification means (1, 1') include a doped fiber optical amplifier, said gain modulation means including:
means for generating a pumping optical signal by amplitude modulating an optical carrier with the auxiliary signal; and
means (4, 4') for coupling together the pumping optical signal and the incident traffic optical signal for application to the doped fiber optical amplifier.

3. A system According to claim 2, characterized in that said means for generating the pumping optical signal include a laser (2, 2') controlled by an electrical signal obtained by superposing a DC component (S1) and an AC component (S2) representing said auxiliary signal.

4. A system according to any one of claims 1 to 3, characterized in that it includes, for the purpose of enabling an equipment of said link to receive auxiliary signals:
means (9, 9') for taking a fraction of the incident optical signal;
means (11, 11') for performing optical to electrical conversion of the optical signal taken in this way;
means (12, 12') for amplifying the electrical signal obtained in this way; and
means (13, 13') for extracting the auxiliary signal from said electrical signal.

5. A system for transmitting an auxiliary signal over an optical link, the system being characterized in that for the purpose of enabling an equipment of the link to relay an auxiliary signal, it includes means according to claim 4 for receiving an auxiliary signal and means according to any one of claims 1 to 3 for emitting an auxiliary signal, the auxiliary signal applied to said means for emitting an auxiliary signal being the signal delivered by said means for receiving an auxiliary signal.
